# EUROPÄISCHE PATENTANMELDUNG

(11) **EP 1 956 348 A2**
(43) Veröffentlichungstag der Anmeldung: **13.08.2008**
(21) Anmeldenummer: 08000717.2
(22) Anmeldetag: 16.01.2008
(51) Int. Cl.: G01F 23/284

(54) **Verwendung eines nach dem Radar-Prinzip arbeitenden Füllstandsmessgeräts**

(30) Priorität: 08.02.2007 DE 102007007024
(71) Anmelder: KROHNE MESSTECHNIK GMBH & CO. KG, 47058 Duisburg (DE)
(72) Erfinder: Gerding, Michael, 44623 Herne (DE); Musch, Thomas, Dr., 45481 Mülheim/Ruhr (DE)
(74) Vertreter: Gesthuysen, von Rohr & Eggert

(57) **Zusammenfassung**

Die Erfindung betrifft eine Verwendung eines nach dem Radar-Prinzip arbeitenden Füllstandsmeßgeräts, das zum Messen des Füllstands eines in einem Behälter (1) befindlichen Mediums (2) dient und eine elektrische Leiteranordnung (3) zum Führen eines elektromagnetischen Signals in dem Behälter (1) hinein und zum Zurückführen reflektierter Anteile des elektromagnetischen Signals aus dem Behälter (1) heraus aufweist, wobei die elektrische Leiteranordnung (3) an einer vorbestimmten Füllstandshöhe in dem Behälter endet. Erfindungsgemäß wird eine Änderung des am behälterseitigen Ende (7) der elektrischen Leiteranordnung (3) reflektierten Anteils des elektromagnetischen Signals als Indiz dafür verwendet, daß das Medium (2) die vorbestimmte Füllstandshöhe erreicht hat. Damit wird es ermöglicht, das Vorhandensein sehr geringer Medienmengen zu detektieren, wie z. B. bei der Überwachung von Abflußrohren, Überlaufbecken oder bei der Leckage-Detektion.

## Beschreibung

Die Erfindung betrifft eine Verwendung eines nach dem Radar-Prinzip arbeitenden Füllstandsmeßgeräts, das zum Messen des Füllstands eines in einem Behälter befindlichen Mediums dient und eine elektrische Leiteranordnung zum Führen eines elektromagnetischen Signals in den Behälter hinein und zum Zurückführen reflektierter Anteile des elektromagnetischen Signals aus dem Behälter heraus aufweist, wobei die elektrische Leiteranordnung an einer vorbestimmten Füllstandshöhe in dem Behälter endet. Ein derartiges Füllstandsmeßgerät ist aus der DE 102 40 550 A1 bekannt.

Das Meßverfahren eines Füllstandsmeßgeräts, das nach dem Radar-Prinzip arbeitet und bei dem eine elektrische Leiteranordnung zum Führen eines elektromagnetischen Signals in den Behälter und zurück vorgesehen ist, basiert auf dem TDR-Meßprinzip (Time Domain Reflectometry), das z. B. aus dem Bereich der Kabelprüfung bekannt ist und Ähnlichkeiten mit der Funktionsweise von herkömmlichen Radargeräten aufweist. Bei einem derartigen TDR-Füllstandsmeßgerät wird z. B. ein extrem kurzer elektrischer Impuls über eine im wesentlichen gerade verlaufende elektrische Leiteranordnung in einem Behälter ausgesandt, in dem sich ein Medium, wie eine Flüssigkeit, ein Pulver oder ein Granulat befindet, dessen Füllstandshöhe bestimmt werden soll. Dabei ist typischerweise eine derartige elektrische Leiteranordnung vorgesehen, die in das Medium hineinreicht und als Einfachleiter oder als Doppelleiter ausgeführt ist. Ist die elektrische Leiteranordnung als Doppelleiter ausgeführt, so kann sie z. B. zwei parallel zueinander verlaufende Leiter aufweisen oder als Koaxialleitung ausgebildet sein.

Ein in eine derartige aus einem Doppelleiter bestehende elektrische Anordnung eingekoppelter Impuls läuft praktisch "zwischen" den beiden Leitern in den Behälter hinein und wird dann an der Oberfläche des Mediums zumindest teilweise reflektiert, wobei der reflektierte Anteil des kurzen elektrischen Impulses im allgemeinen von einer Auswerteelektronik empfangen wird, um die Laufzeit und damit die Füllstandshöhe des Mediums im Behälter zu bestimmen. Der reflektierte Anteil des kurzen elektrischen Impulses hängt von der Dielektrizitätszahl des Mediums ab und steigt mit dieser, Dabei ist die Laufzeit des Signals proportional zur Füllstandshöhe des in dem Behälter befindlichen Mediums. Sich verändernde Umgebungsbedingungen, wie ein steigender oder ein fallender Umgebungsdruck oder eine steigende oder eine fallende Temperatur, beeinträchtigen die Meßgenauigkeit des TDR-Füllstandsmeßgeräts nicht. Außerdem ist die Laufzeit des Signals unabhängig von der Dielektrizitätszahl des Mediums, dessen Füllstand gemessen werden soll.

Bei herkömmlichen Füllstandsmeßgeräten, die nach dem Radar-Prinzip arbeiten und eine elektrische Leiteranordnung, wie zuvor beschrieben, aufweisen, existieren sogenannte "Totzonen", die Füllstandsbereiche des Mediums beschreiben, in denen eine Messung nicht oder nur mit großer Ungenauigkeit möglich ist. Aufgrund von mechanischen Diskontinuitäten im Bereich der Leiteranordnung existieren im allgemeinen eine "obere Totzone" in dem Bereich, in dem die Leiteranordnung in den Behälter hineingeführt ist, und eine "untere Totzone" am Ende der Leiteranordnung, also in dem Bereich, der dem Boden des Behälters am nächsten ist. In diesen "Totzonen" kommt es zu relativ starken Reflektionsanteilen des elektromagnetischen Signals, die einen am Medium in diesen Bereichen reflektierten Signalanteil deutlich überlagern würden. Das Vorhandensein der in Rede stehenden "Totzonen" wird damit im allgemeinen als Beeinträchtigung empfunden, da die Möglichkeiten der Füllstandsmessung mittels des Füllstandsmeßgeräts gemindert werden.

Es ist die Aufgabe der Erfindung, eine derartige Verwendung eines nach dem Radar-Prinzip arbeitenden Füllstandsmeßgeräts anzugeben, die dem Verwender des Geräts einen Zusatznutzen liefert.

Ausgehend von der eingangs beschriebenen Verwendung ist diese Aufgabe dadurch gelöst, daß eine Änderung des am Ende der Leiteranordnung reflektierten Anteils des elektromagnetischen Signals als Indiz dafür verwendet wird, daß das Medium die vorbestimmte Füllstandshöhe, an der die elektrische Leiteranordnung endet, erreicht hat.

Erfindungsgemäß wird also die bisher lediglich als Beeinträchtigung empfundene Störung durch die Reflektion am unteren Ende der Leiteranordnung dazu verwendet, eine vorbestimmte Füllstandshöhe des Mediums in dem Behälter - zu detektieren. Anders ausgedrückt heißt das, daß das nach dem Kadaz-Pzinzip arbeitende Füllstandsmeßgerät mit einer Schwellwertschalterfunktxon versehen wird, um einen derartigen Füllstand des Mediums in dem Behälter zu erfassen, bei dem das Medium das Ende der Leiteranordnung gerade benetzt bzw. nicht mehr benetzt. Dabei kann also sowohl detektiert werden, daß bei steigendem Füllstand das Medium das Ende der Leiteranordnung gerade erreicht hat und als auch daß bei fallendem Füllstand das Medium gerade unter die vorbestimmte Füllstandshöhe gefallen ist.

Grundsätzlich kann die Leiteranordnung verschiedenen Geometrien folgen, insbesondere können nämlich sowohl Stäbe und Rohre als auch Seile als Leiter verwendet werden. Gemäß einer bevorzugten Weiterbildung der Erfindung ist vorgesehen, daß als Leiteranordnung eine Doppelleiteranordnung mit offenem Ende verwendet wird. Gemäß dieser bevorzugten Weiterbildung der Erfindung sind also die beiden Leiter am behälterseitigen Ende der Leiteranordnung voneinander elektrisch isoliert. Diese Ausgestaltung hat die weiter unten beschriebenen Vorteile, wobei jedoch bemerkt werden soll, daß grundsätzlich auch eine impedanzangepaßte Anordnung möglich ist, bei der die beiden Leiterenden z. B. mit einem elektrischen Widerstand miteinander verbunden sind.

Gemäß einer bevorzugten Weiterbildung der Erfindung ist ferner vorgesehen, daß das offene Ende der Doppelleitezan,ordnurig bezüglich der Empfindlichkeit gegenüber kapazitiven Veränderungen, wie sie insbesondere bei nichtleitenden Medien vorkommen, optimiert sind. Dies kann insbesondere dadurch erreicht werden, daß die beiden Leiter der Doppelleiteranordnung an ihren Enden geometrisch unterschiedlich ausgebildet sind. Insbesondere ist gemäß einer bevorzugten Weiterbildung der Erfindung dabei vorgesehen, daß die beiden Leiter der Doppelleiteranordnung unterschiedlich weit in den Behälter reichen. Bei einer Ausgestaltung der Doppelleiteranordnung als Koaxialleiteranordnung ist dabei insbesondere vorgesehen, daß der Innenleiter gegenüber dem Außenleiter vor- bzw. zurückgezogen ist.

Als Änderung des am Ende der Leiteranordnung reflektierten Anteils des elektromagnetischen Signals können z. B. Form und/oder Amplitude des Signals verwendet werden. Gemäß einer bevorzugten Weiterbildung der Erfindung ist jedoch vorgesehen, daß als Änderung des am Ende, der Leiteranordnung reflektierten Anteils des elektromagnetischen Signals eine Polaritätsumkehr dieses Signals verwendet wird. Bei Flüssigkeiten mit einer relativ hohen Dielektrizitätszahl bzw. einer hohen elektrischen Leitfähigkeit ergibt sich bei einer Doppelleiteranordnung mit offenem Ende eine vollständige Polaritätsumkehr des reflektierten Signals, sobald das Ende der Doppelleiteranordnung mit der Flüssigkeit benetzt wird. Diese PoXaritätsumkehr läßt sich sicher und eindeutig detektieren und somit als Überwachungskriterium für das Erreichen des vorbestimmten Füllstands heranziehen.

Die Erfindung wird nachfolgend anhand eines bevorzugten Ausführungsbeispiels der Erfindung unter Bezugnahme auf die Zeichnung im Detail erläutert. In der Zeichnung zeigt
- Fig. 1: schematisch ein Füllstandsmeßgerät zur erfindungsgemäßen Verwendung und
- Fig. 2a, b: das Laufzeitsignal vor bzw. nach Benetzung des Endes der Leiteranordnung des Füllstandsmeßgeräts.

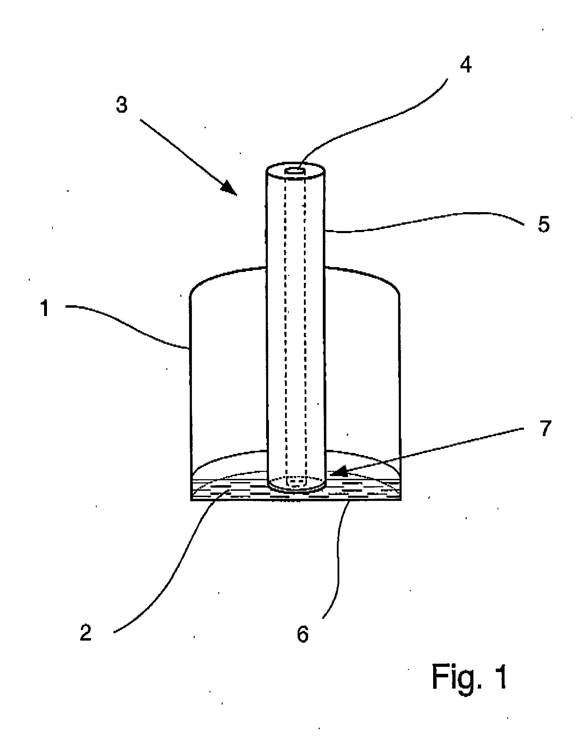

Aus Fig. 1 ist schematisch ein übliches TDR-Füllstandsmeßgerät ersichtlich, das zum Messen des Füllstands eines in einem Behälter 1 befindlichen Mediums 2 dient. Als elektrische Leiteranordnung 3 zum Führen eines elektromagnetischen Signals in den Behälter 1 hinein und zum Zurückführen reflektierte Anteile des elektromagnetischen Signals aus dem Behälter 1 hinaus ist eine Koaxialleiteranordnung mit einem Innenleiter 4 und einem Außenleiter 5 vorgesehen.

Die Leiteranordnung 3 endet mit einem offenen Ende 7 kurz über dem Boden 6 des Behälters 1. Durch das Ende 7 der Leiteranordnung 3 wird eine vorbestimmte Füllstandshöhe des Mediums 2 in dem Behälter definiert, Daß das Medium 2 diese vorbestimmte Füllstandshöhe in dem Behälter 1 erreicht hat, wird wie folgt detektiert;

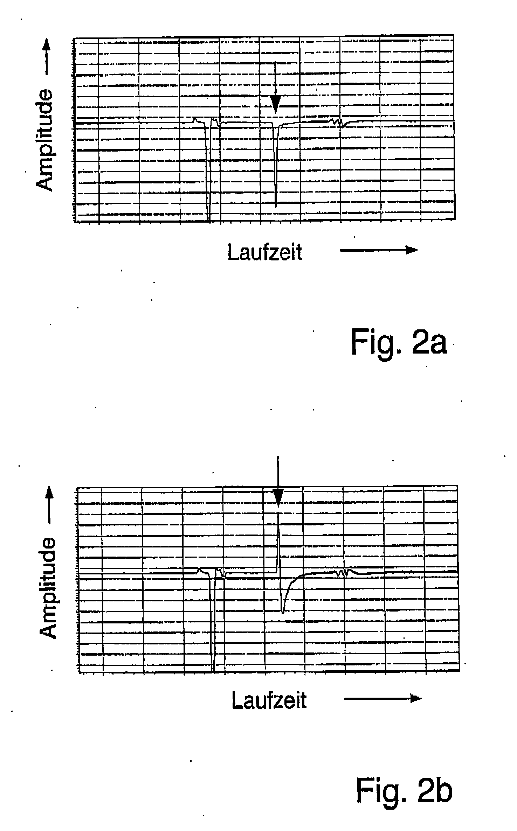

Wie bei einem TDR-Füllstandsmeßgerät üblich, wird ein extrem kurzer elektrischer Impuls in die elektrische Leiteranordnung 3 eingekoppelt, und es wird ein Laufzeitspektrum der reflektierten Anteile erfaßt. Ein solches Spektrum ist exemplarisch in den Fig. 2a und 2b dargestellt, wobei der Anteil des am Ende der Leiteranordnung 3 reflektierten elektromagnetischen Signals jeweils mit einem Pfeil gekennzeichnet ist. Dabei zeigt Fig. 2a den Fall, daß das Medium 2 die vorbestimmte Füllstandshöhe noch nicht erreicht hat, und Fig. 2b zeigt den Fall, daß das Medium 2 das Ende 7 der Leiteranordnung 3 gerade benetzt hat oder bereits darüber hinaus gestiegen ist. Wie ein Vergleich der Fig. 2a und 2b zeigt, ergibt sich mit der Benetzung des Endes 7 der Leiteranordnung 3 durch das Medium 2 eine vollständige Polaritätsumkehr des reflektierten Signals, wenn wie vorliegend bei offenem Ende (7) der Leiteranordnung als Medium z. B. eine Flüssigkeit mit einer relativ hohen Dielektrizitätskonstante bzw. einer hohen elektrischen Leitfähigkeit verwendet wird.

Typische Anwendungen liegen z. B. in Einsatzgebieten, in denen das Vorhandensein sehr geringer Flüssigkeitsmengen zu detektieren ist, was z. B. bei der Überwachung von Abflußrohren, Überlaufbecken und der Leckage-Detektion vorkommt. Dabei kann das Ende 7 der Leiteranordnung 3 sehr knapp über dem Boden 6 des Behälters 1 vorgesehen werden, Es ist kein Sumpf oder ähnliches nötig, so daß nach dem Leeren des Behälters 1 keine Medienreste in der Meßumgebung verbleiben.

## Patentansprüche

1. Verwendung eines nach dem Radar-Prinzip arbeitenden Füllstandsmeßgerät, das zum Messen des Füllstands eines in einem Behälter (1) befindlichen Mediums (2) dient und eine elektrische Leiteranordnung (3) zum Führen eines elektromagnetischen Signals in den Behälter (1) hinein und zum Zurückführen reflektierter Anteile des elektromagnetischen Signals aus dem Behälter (1) heraus aufweist, wobei die elektrische Leiteranordnung (3) an einer vorbestimmten Füllstandshöhe in dem Behälter (1) endet, **dadurch gekennzeichnet, daß** eine Änderung des am Ende (7) der elektrischen Leiteranordnung (3) reflektierten Anteils des elektromagnetischen Signals als Indiz dafür verwendet wird, daß das Medium (2) die vorbestimmte Füllstandshöhe erreicht hat.

2. Verwendung nach Anspruch 1, **dadurch gekennzeichnet, daß** die elektrische Leiteranordnung (3) von einer Doppelleiteranordnung gebildet wird.

3. Verwendung nach Anspruch 2, **dadurch gekennzeichnet, daß** die Doppelleiteranordnung ein offenes Ende (7) aufweist.

4. Verwendung nach Anspruch 2 oder 3, **dadurch gekennzeichnet, daß** die beiden Leiter der Doppelleiteranordnung an ihren Enden geometrisch unterschiedlich ausgebildet sind,

5. Verwendung nach Anspruch 4, **dadurch gekennzeichnet, daß** die beiden Leiter der Doppelleiteranordnung unterschiedlich weit in den Behälter (1) reichen.

6. Verwendung nach Anspruch 5, **dadurch gekennzeichnet, daß** als Doppelleiteranordnung eine Koaxialleiteranordming vorgesehen ist, bei der das Ende des Innenleiters (4) gegenüber dem Ende des Außenleiters (5) vor- bzw. zurückgezogen ist.

7. Verwendung nach einem der Ansprüche 1 bis 6, **dadurch gekennzeichnet, daß** als Änderung des am Ende (7) der elektrischen Leiteranordnung (3) reflektierten Anteils des elektromagnetischen Signals eine Polaritätsumkehr dieses Signals verwendet wird.
